# EUROPEAN PATENT SPECIFICATION

(11) **EP 2 391 952 B1**
(45) Date of publication and mention of the grant of the patent: **07.03.2018**
(21) Application number: 10736345.9
(22) Date of filing: 27.01.2010
(51) Int. Cl.: H04W 4/00, G06F 15/16

(54) **DEVICE ASSISTED SERVICES INSTALL**
INSTALLATION VON GERÄTEUNTERSTÜTZTE DIENSTEN
INSTALLATION DE SERVICES ASSISTÉS PAR DISPOSITIF

(30) Priority: 13.02.2009 US 207739 P; 24.11.2009 US 264120 P; 04.02.2009 US 206944 P; 10.02.2009 US 207393 P; 28.01.2009 US 206354 P; 02.03.2009 US 380780 P
(43) Date of publication of application: 07.12.2011
(73) Proprietor: Headwater Research LLC, Tyler, TX 75703 (US)
(72) Inventor: RALEIGH, Gregory, G., Woodside, CA 94062 (US)
(74) Representative: Eisenführ Speiser
(86) International application number: PCT/US2010/022240
(87) International publication number: WO 2010/088278

(56) References cited:
- US-A1- 2004 102 182
- US-A1- 2004 137 890
- US-A1- 2006 135 144
- US-A1- 2006 143 098
- US-A1- 2007 130 315
- US-A1- 2007 226 225
- US-A1- 2008 059 743
- US-A1- 2008 166 993
- US-A1- 2008 183 812
- US-B1- 6 996 076

## Description

### BACKGROUND OF THE INVENTION

With the advent of mass market digital communications, applications and content distribution, many access networks such as wireless networks, cable networks and DSL (Digital Subscriber Line) networks are pressed for user capacity, with, for example, EVDO (Evolution-Data Optimized), HSPA (High Speed Packet Access), LTE (Long Term Evolution), WiMax (Worldwide Interoperability for Microwave Access), DOCSIS, DSL, and Wi-Fi (Wireless Fidelity) becoming user capacity constrained. In the wireless case, although network capacity will increase with new higher capacity wireless radio access technologies, such as MIMO (Multiple-Input Multiple-Output), and with more frequency spectrum and cell splitting being deployed in the future, these capacity gains are likely to be less than what is required to meet growing digital networking demand.

Similarly, although wire line access networks, such as cable and DSL, can have higher average capacity per user compared to wireless, wire line user service consumption habits are trending toward very high bandwidth applications and content that can quickly consume the available capacity and degrade overall network service experience. Because some components of service provider costs go up with increasing bandwidth, this trend will also negatively impact service provider profits.

US patent application US 2008/0166993 A1 discloses methods, systems and graphical user interfaces that facilitate activation of mobile devices, such as communication devices or multi-function devices, via computers are disclosed. According to one embodiment of the application, activation of a mobile device with respect to a wireless service provider can be performed by users through use of a computer (e.g., personal computer) that communicate with a remotely located activation server. According to another embodiment of the application, graphical user interfaces can be presented to users so as to enable end users to easily activate mobile devices.

US patent application US 2004/0137890 A1 discloses automated activation and provisioning technologies that can be applied in a variety of scenarios. For example, an automated activation and provisioning server can translate user desired features into associated provisioning directives. The directives can then be sent to elements of a wireless communications network support system. Activation and provisioning for a rich set of features can thus be achieved without manual intervention or reaction to the user's choices. Receipt of the user's choices can be accomplished in real time via a user interface of a mobile wireless device or a web-based user interface.

US patent application US 2006/0143098 A1 discloses a system and method for service activation in mobile network billing. The embodiments described therein provide a user with the ability to select from a list of available services that can be used on a mobile device. The services include device-based services and device-network based services. The activation, usage tracking and deactivation of a selected service can be conducted at a central location. Some of the services can be provided by different carrier network providers and in different geographical areas. The service selection can be performed from the mobile device, thus providing the user with maximum flexibility as to when and where the user requests the service.

US patent application US 2004/0102182 A1 discloses a method of providing telecommunications services, wherein users are authenticated and authorized to a first service profile before a user session starts, characterized in that the service profile is dynamically varied in the course of the session.

US patent application US 2006/0135144 A1 discloses a method of customizing a wireless device to a predetermined configuration. A wireless device configured with at least one carrier-specific parameter for a first carrier is modified to access at least one carrier-specific parameter for a second carrier during operation of the wireless device and responsive to a predetermined network switch input received by the wireless device. A carrier customization module system for a wireless device includes a carrier customization module loader executed by the wireless device which is configured with at least one carrier-specific parameter for a first carrier. The loader selects at least one carrier-specific parameter for a second carrier from among one or more carrier-specific parameters during operation of the wireless device and responsive to a predetermined network switch input received by the wireless device. The loader modifies the wireless device to access the second carrier using the selected carrier-specific parameter for the second carrier.

### BRIEF DESCRIPTION OF THE DRAWINGS

Various embodiments of the invention are disclosed in the following detailed description and the accompanying drawings.
Figure 1 illustrates a wireless network architecture for providing device assisted services (DAS) install techniques in accordance with some embodiments.
Figure 2 illustrates another wireless network architecture for providing DAS install techniques in accordance with some embodiments.
Figure 3 illustrates a flow diagram for DAS install techniques in accordance with some embodiments.
Figure 4 illustrates another flow diagram for DAS install techniques in accordance with some embodiments.
**Figure 5** illustrates another flow diagram for DAS install techniques in accordance with some embodiments.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

Device assisted services (DAS) install techniques are provided in accordance with some embodiments. In some embodiments, DAS install techniques for providing service processors for mobile devices are provided. In some embodiments, DAS install techniques for downloading/installing new and/or updated service processors for mobile devices are provided. In some embodiments, DAS install techniques for providing verified service processors for mobile devices are provided. In some embodiments, DAS install techniques for providing secured service processors for mobile devices are provided. In some embodiments, DAS install techniques include providing a generic first version service processor for downloading and installing a second version service processor. These and other DAS install techniques are described herein with respect to various embodiments.

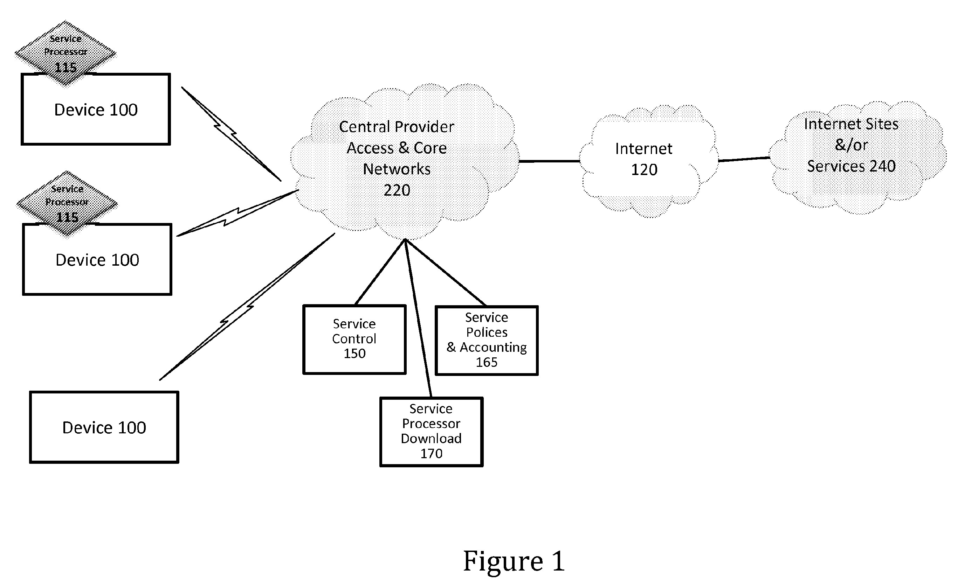

**Figure 1** illustrates a wireless network architecture for providing device assisted services (DAS) install techniques in accordance with some embodiments. As shown, Figure 1 includes various wireless communications devices 100 (e.g., a mobile wireless device or an intermediate networking device) in wireless communication with central provider access and core networks 210. As shown, some of the devices 100 include service processors 115. For example, devices 100 can include various types of mobile phones, PDAs, computing devices, laptops, netbooks, tablets, cameras, music/media players, GPS devices, networked appliances, and any other networked device. In some embodiments, intermediate networking devices, as described herein, include a service processor or assist in the downloading of a service processor for one or more devices 100 to facilitate network access as described herein with respect to various embodiments. In some embodiments, a device 100 does not initially include a service processor (as shown in Figure 1). In some embodiments, a service processor 115 is previously installed (e.g., during manufacture or distribution), or is downloaded and installed on a device 100 (as also shown in Figure 1).

In some embodiments, the wireless communications device is a mobile communications device, and the service includes one or more Internet based services, and the mobile communications device includes one or more of the following: a mobile phone, a PDA, an eBook reader, a music device, an entertainment/gaming device, a computer, laptop, a netbook, a tablet, and a home networking system. In some embodiments, the wireless communications device includes a modem, and the processor is located in the modem. In some embodiments, an intermediate networking device includes any type of networking device capable of communicating with a device and a network, including a wireless network, example intermediate networking devices include a femto cell, or any network communication device that translates the wireless data received from the device to a network, such as an access network. In some embodiments, intermediate networking devices include 3G/4G WWAN to WLAN bridges/routers/gateways, femto cells, DOCSIS modems, DSL modems, remote access/backup routers, and other intermediate network devices.

In some embodiments, there are at least two versions of a service processor. For example, a first version service processor can be a generic version of a service processor version that can be pre-installed during manufacture or distribution and used for downloading a second version service processor. For example, the first version service processor can be a generic version that is not specific to a device group while the second version is specific to a device group. As another example, the first version service processor installed during time of manufacture or during device distribution may not contain all of the functions that are available for a permanent second version service processor that is installed when the device first connects to a network. As another example, service processors can be regularly updated to change the security parameters of the software, such as software signatures, encryption, obfuscation, secure query response sequence information, and/or other parameters, so that it becomes more difficult to hack or otherwise modify the software. As another example, the second version service processor can be uniquely associated with the device 100 (e.g., wireless communications device or an intermediate networking device) and the associated service plan and/or service provider. In some embodiments, a first version service processor is installed on a device 100 (e.g., service processor 115 installed on the device 100 can be a first version service processor that was previously installed during manufacture or distribution, or downloaded and installed during initial network access, as shown in Figure 1). In some embodiments, a second version service processor is installed on a mobile device (e.g., service processor 115 can be a second version service processor that was previously installed during manufacture or distribution, or downloaded and installed during initial network access, as shown in Figure 1).

In some embodiments, a new and/or updated version service processor 115 can be downloaded from, for example, a service processor download 170, as described herein. In some embodiments, the service processor download 170 provides a function or service that is located elsewhere in the network or partially located in elsewhere or integrated with/as part of other network elements (e.g., the service processor download 170 can be a function/service of service control 150 and/or service policies and accounting 165). In some embodiments, the devices 100 are in service control communication with service control 150 via central provider access and core networks 220 as shown in Figure 1. Service policies and accounting functions 165 are also provided in communication with the central provider access and core networks 220 as shown in Figure 1. In some embodiments, the service policies and accounting functions 165 provides a function or service that is located elsewhere in the network or partially located in elsewhere or integrated with/as part of other network elements (e.g., the service policies and accounting functions 165 can be a function/service of service control 150).

In some embodiments, the devices 100 network access is initially restricted to service control related access for service processor 115 verification and/or download(s)/update(s) (e.g., a first version service processor installed on the mobile device 100 can limit or direct network access to the service control 150, service processor download 170, and/or service policies and accounting function 165), as described herein with respect to various embodiments. In some embodiments, after this initial restricted access period is completed and/or if the service processor 115 of the mobile device 100 is verified for the device and is current/updated, the device 100 can communicate via the central provider access and core networks 220 to the Internet 120 for access to various Internet sites and/or services 240 as shown in Figure 1 (e.g., Google sites/services, Yahoo sites/services, Blackberry services, Apple iTunes and AppStore, Amazon.com, FaceBook, and/or any other Internet based sites and/or services) based on, for example, the service plan associated with the device 100. In some embodiments, service usage information (e.g., based on network based CDRs or device generated CDRs, such as micro-CDRs generated by the service processor 115, and/or other service usage measures) are used for service control and/or service plan billing and reporting, as described herein with respect to various embodiments.

Those of ordinary skill in the art will appreciate that various other network architectures can be used for DAS install techniques, and Figure 1 is illustrative of just another such example network architecture for which DAS install techniques described herein can be provided.

In some embodiments, Figure 1 provides a wireless network architecture that also supports partitioned device groups, in which each device group can be provided independent and secure management. In some embodiments, partitioned device groups are provided. In some embodiments, each partitioned group of devices (e.g., mobile devices 100) can be uniquely managed with secure admin log-ins. In some embodiments, the partitioned device groups are securely managed using the service processor 115 installed on the devices 100 for that device group. In some embodiments, multi-device, multi-user accounting is provided. In some embodiments, capabilities are provided to support multi-party/multi-service reconciliation records to carriers and carrier partners. In some embodiments, service usage and profitability analytics are provided. For example, a partitioned beta test group of devices can be tested and optimized for various service usage policies and/or service plans, and then the optimized service usage policies and/or service plans can be published to an entire or larger device group. In some embodiments, a carrier can be provided a carrier branded device group, and/or a MVNO can be provided a MVNO branded device group.

In some embodiments, DAS install clients (e.g., bootstrappers for devices 100) are provided. In some embodiments, a first version service processor provides DAS install client function that facilitates a bootstrapping function for downloading and installing a second version service processor. In some embodiments, DAS install clients are provided for creating/downloading and installing a verifiable service processor for each device (e.g., a network capable device, such as a mobile wireless communications device or intermediate networking device). In some embodiments, a DAS install client downloads a uniquely secured service processer for device 100 (e.g., hashed/encrypted, such as based on device credentials, to prevent, for example, mass hacking or other security vulnerabilities, and/or a signed interface between the service processor and modem). In some embodiments, a non-advertised IP address allocated for each device group is rotated (e.g., to counter denial of service (DoS), distributed denial of service (DDS), and/or other types of attacks and/or vulnerabilities or exploits), and service processors are configured with multiple IP addresses for service control access (e.g., for secured network communication with service control 150 and/or service policies and accounting 165).

In some embodiments, DAS install techniques include one or more of the following operations. First, in some embodiments, whether a device is in a device group or list that includes an installed, up to date, and/or validated service processor is determined (e.g., verify that SIM, ESN, or other unique device identifier is registered, such as in a Home Location Register (HLR)/Network Information Repository (NIR) database or other authorized data store, as associated with service settings/policies for that device for service access and send its associated Charging Data Records (CDRs) to the service controller). Second, in some embodiments, if the device does not have an installed, up to date, and/or validated service processor, then the device is directed to, for example, an activation server to, for example, authenticate the device and/or verify a service processor for the device (e.g., ensure that a current and verified service processor version is installed and/or download a current and verified service processor version for the device).

For example, a DAS install client can be downloaded and installed (e.g., using various bootstrapping techniques, in which, for example, during the installation of the service processor software it is sometimes necessary to update the installer or package manager itself, by using, for example, a small executable file, such as a bootstrapper, that updates the installer and then initiates the new/updated/second version service processor installation after the update, and, in some cases, the bootstrapper can install other prerequisites for the service processor software during the bootstrapping process as well; and using network access to a download server, and/or from a website, including, for example, service processor download function 170) that allows for secure connection from the device (e.g., mobile device 100) to a secure download server (e.g., service processor download 170). In this example, support for a configuration of the device can be determined, such as through a device query or device download of client verification software can be used to verify the device hardware/software configuration). In this example, a user/device validation step can also be performed. For example, an authorization process for a user sign-up can be performed (e.g., based on a user name, MAC address, Turing machine text verification, and/or credit card verification or using other authorization/validation techniques), in which this can be performed automatically or the user/device can be required to enter certain credentials for authorization/validation.

In some embodiments, the authorization process also includes various security techniques for securely associating a user's identity with the device (e.g., using public key/TLS techniques, SSH techniques for TLS, and/or identity management techniques or other security techniques). For example, a check can also be performed to determine if the device was previously and/or is currently an activated device (e.g., the device is already associated with an active service plan). For example, whether the device belongs to a registered device group can also be determined during a DAS install, and if not, then the default settings for that type of device can be applied. In some embodiments, the service processor is encrypted, hashed, and/or obfuscated based on the previous determination (e.g., device group association, default device settings, and/or any other settings/criteria).

In some embodiments, if the device is not associated with a service plan (e.g., based on the device look-up using device based unique identifier(s)/credential(s) or using other techniques, as described herein), then the device can be redirected to a service portal for an activation offer for a service plan (e.g., using an activation server). In some embodiments, the portal utilizes header information to indicate that the device is a managed device (e.g., for a given service provider, MVNO, or other service partner) in the portal request to proxy to an appropriate proxy server for that service provider for the activation process.

In some embodiments, the device is in probation mode after the new service processor install (e.g., restricted a restricted IP address can be used for the service controller or other network element for service control instead of the secured service controller IP addresses reserved for validated and non-probation mode service processors, which, for example, can reduce the risks of various security risks, such as DoS, DDS, and/or other mass or other types of attacks against publicly or other more easily accessible service controller or download servers). In some embodiments, while in probation mode, the service processor executes more robust service monitoring techniques (e.g., more frequent and/or more robust service integrity checks and/or more frequent heartbeats, for example, to monitor actual device/user behavior with the associated expected behavior, as described herein with respect to various embodiments). In some embodiments, after a probation period ends, the device is provided access based on the associated service plan, which is managed, at least in part, by the service processor (e.g., service processor 115) in communication with, for example, a service controller (e.g., service control 150 and service policies and accounting 165) or other authorized network elements for service control.

In some embodiments, the various techniques and embodiments described herein can be readily applied to intermediate networking devices (e.g., an intermediate modem or networking device combination). In some embodiments, intermediate networking devices include, for example, WWAN/WLAN bridges, routers and gateways, cell phones with WWAN/WLAN or WWAN/Bluetooth, WWAN/LAN or WWAN/WPAN capabilities, femto cells, back up cards for wired access routers, and/or other intermediate networking devices. In some embodiments, an intermediate networking device (e.g., an intermediate modem or networking device combination) downloads and sends a service processor to one or more devices communicating via the intermediate networking device. In some embodiments, an appropriate and validated service processor is securely downloaded to the intermediate networking device, and the intermediate networking device performs the service processor functions for various wireless communication devices (e.g., mobile wireless communication devices) in communication with the intermediate networking device. In some embodiments, in which one or more wireless communication devices are in wireless communication via an intermediate networking device, some of the service processor functions are performed on the intermediate networking device (e.g., an appropriate and validated service processor is installed or securely downloaded and installed on the intermediate networking device), and some of the service processor functions are performed on the one or more wireless communication devices (e.g., an appropriate and validated service processor is installed or securely downloaded and installed on the mobile device) (e.g., stack controls can be performed on the mobile device and various other controls can be performed on the intermediate networking device). In some embodiments, the one or more wireless communication devices cannot access the network via the intermediate networking device (e.g., the devices are quarantined) unless the one or more wireless communication devices each have an installed and functioning verified service processor (e.g., using CDRs from intermediate networking device and/or network).

In some embodiments, a USB WLAN stick or other similar networking device is provided (e.g., including a modem) with DAS install client software that loads onto the device 100 and installs a service processor 115 on the device 100. In some embodiments, software on the device 100 instructs the user to insert a properly configured memory device (e.g., a secured USB memory stick, dongle, or other secured device that can provide a DAS install client software, a service processor image, and/or device credentials for network access). In some embodiments, the USB WLAN installed software assumes control over, for example, the network stack of the device (e.g., for managing network access) and sets various service policies based on whether the service is communicated via the USB WLAN stick or via the WiFi/other (e.g., including requiring no policies, such that access is open). In some embodiments, the DAS install client software on the USB WLAN stick provides a secure client that installs itself/certain software on the device that provides a DAS install client (e.g., bootstrapper) for the device, and the DAS install client downloads an appropriate service processor onto the device and/or the USB WLAN stick (e.g., the stack can also be located and managed on the USB WLAN stick).

In some embodiments, DAS install techniques include ensuring that a device's (e.g., the device modem's) credentials for the access network match the unique credentials for the service processor and the unique credentials for the device (e.g., MAC, SIM, MZ, and/or other unique credentials for the device). In some embodiments, DAS install techniques include ensuring that multiple IP addresses are not associated with the same service processor for a particular device. In some embodiments, DAS install techniques include determining that this is the same device/modem that a service processor was previously downloaded for and whether that prior service processor is still active on the network. If so, then, in some embodiments, the user is required to type in, for example, a password to continue, for example, a reimaging of the device (or prevent the new device install or to disable the previously activated other service processor).

In some embodiments, DAS install techniques include starting with a device that does not include a service processor (e.g., a device, with, for example, a SIM or EVDO ESSN, but with no service processor, attempts to connect to the network, an appropriate service processor for the device is determined, and then a uniquely associated service processor is downloaded and installed on the device, for example, using a bootstrapper, as similarly described herein). In some embodiments, unique device credentials (e.g., MAC, SIM, MZ, and/or other unique credentials for the device) are used to create a secure connection with, for example, the service controller (e.g., service control 150) or a secure download server (e.g., service processor download 170), to download a (e.g., new or replacement) service processor to be securely installed on the device. Accordingly, as similarly described herein, DAS install techniques can be applied to at least one or more of the following situations: a new service processor install; and/or a replacement service processor install (e.g., the originally/previously installed service processor was wiped/reimaged, hardware failure, or otherwise corrupted or deleted, and, thus, a replacement service processor is needed). In some embodiments, when a device connects to the network without, for example, a service processor, then a look up is performed (e.g., in a data store, such as a database) to determine whether the device is a member of a device group or a new device, and an appropriate service processor (e.g., version and settings) is provided for installation on the device. In some embodiments, when the device attempts an initial access to the network, at that time an updated version of a service processor for that device can be provided based on, for example, device type, device group, master agent, user interface (UI), settings, marketing pages, and/or other features and/or settings, which, for example, can allow for a new, changed, or evolving service plan/program by the time the device logs onto the network to provide, for example, for a dynamic and scalable solution.

In some embodiments, as similarly discussed above, two versions of the service processor are provided (e.g., a first version/image and a second version/image of the service processor software). In some embodiments, a first version service processor is a general purpose version used, for example, primarily for connecting to the network and loading a second version service processor software that, for example, can be one or more of the following: an updated version, a version tailored to a more specific purpose (e.g., based on a device type, device group, service type, service provider or service provider partner, or any other purpose/criteria), a version that includes additional features/functionality, an encrypted service processor version, a version that includes special service plan settings or capabilities associated with a device group, a version that includes specific branding or features/functionality for a given service provider or service provider partner associated with a device group, a version that includes special marketing materials to motivate the user to try or buy services or transactions associated with a device group, and various other versions as will now be apparent to one of ordinary skill in the art in view of the various embodiments described herein.

In some embodiments, depending on whether the user has pre-signed up for a service plan, for example, a different version of the service processor software and/or settings is/are downloaded to the device during this initial service processor download process, including, for example, one or more of the following: a different set of options for service plan choices, marketing materials, ambient service settings and service options, service plan settings, and possibly various other features and/or settings.

In some embodiments, the first version of the service processor is installed during manufacturing or in the distribution channel prior to sale of the device. In some embodiments, the first version of the service processor is installed after the time of sale of the device using various DAS install techniques as described herein with respect to various embodiments.

In some embodiments, the first version of the service processor is not uniquely encrypted so that a general purpose version of the first service processor image can be distributed to multiple devices (e.g., downloadable via the Internet, such as through a website, or a software update not installed by an operable service processor or a software image that is loaded onto the device before the device credentials or device group associations are available or known). In some embodiments, a non-encrypted generic version of the service processor is used for broad distribution to many devices in which the device credentials are not known at the time of service processor software distribution (e.g., the generic version of the service processor can log onto the network to access a software update function in the service controller or service control 150, service processor downloader or service process download 170, and/or similar authorized network function, then the service controller can obtain the device credentials and/or user information and provide an updated version of the service processor using the various techniques or similar techniques to those described herein). In some embodiments, the second/updated version of the service processor is uniquely encrypted (e.g., based at least in part on the device credentials or device group associations).

In some embodiments, a first version of the service processor need not be uninstalled and replaced by a new install of a second version of the service processor, as, in some embodiments, the second version of the service processor includes updates to the first version of the service processor, settings changes to the first version of the service processor, and/or encryption or obfuscation of the first version of the service processor to provide a second version of the service processor that is uniquely associated with the device, the device user, the device group, and/or the service plan associated with the device. In some embodiments, the second/updated version of the service processor includes one or more restricted IP addresses providing for access to the secured service control/service controller IP addresses reserved for validated and non-probation mode service processors, which, for example, can reduce the risks of various security risks for the secured service control/service controller(s), such as DoS, DDS, and/or other mass or security attacks against publicly or other more easily accessible service control/service controller(s) and/or service processor download servers.

In some embodiments, the second version of the service processor is uniquely associated with some aspect(s) of the device credentials and/or user information with a temporary user account (e.g., also sometimes referred to herein as a dummy user account) or user account. In some embodiments, the second version of the service processor and/or the settings in the service processor are chosen based on a look up of some aspect of the device credentials and/or the user information to determine which device group version of the service processor and/or settings should be loaded. In some embodiments, when there is no appropriate device group association or the user preference takes priority over device group association, the first version of the service processor software is used to log onto the network (e.g., including potentially the service controller) to select a service offer, or device group association that then determines the second version and/or settings of the service processor software that will be loaded onto the device.

In some embodiments, the first version of the service processor is installed on aftermarket devices, and after installation this more general purpose version of the service processor provides for access to the service control/service controller (or similar network function). In some embodiments, the service control/service controller determines what type of device and/or what operating system (OS) software and/or what modem and modem software is on the device, and then loads an appropriate version of the service processor for that device or facilitates an updating of the first version of the service processor to provide a second version of the service processor for that device.

In some embodiments, the service processor is distributed on a peripheral device suitable for use with more than one type of device and/or more than one type of OS. Accordingly, in some embodiments, more than one version of the service processor can be shipped with the device for installation on the device once the device type and/or OS type is/are known, with each version of the software either being a first version of the service processor software as discussed above, or a second version or final version of the service processor software as similarly discussed above with respect to various embodiments.

In some embodiments, the first version/second version service processor software techniques, for example, allow for installations of a new OS version that is not compatible in some way with the present version of the service processor. For example, the installation of such a new and incompatible OS version can render the currently installed service processor version incapable of connecting to the network and updating the service processor. In such an example, a first version service processor software image that is compatible with the new OS can be used to access the network (e.g., connect to the service control/service controller or some other network element) to download and install a new, possibly uniquely encrypted and compatible second service processor image, as similarly discussed above with respect to various embodiments.

In some embodiments, the first version/second version service processor software techniques, for example, can handle situations in which a device has an inadvertently wiped or damaged service processor image such that the device is no longer capable of logging onto the network with its secure credentials and/or uniquely encrypted service processor software image. In such an example, the first version software processor can then be used as similarly described above with respect to various embodiments to download and install a new/replacement second version service processor on the device.

In some embodiments, there are multiple types of device log-in to the service control/service controller depending on whether a first or second version service processor is being used. For example, if a second version service processor is being used, which, in some embodiments, includes unique secure credentials, a uniquely encrypted or secure heartbeat channel, and/or a uniquely encrypted service processor software image, then the capabilities of the device and/or service processor to access the network and/or service controller elements can be as similarly described herein with respect to various embodiments. However, if the device is using a first version service processor, which, for example, does not have unique secure credentials, a uniquely encrypted heartbeat control channel, and/or a uniquely encrypted software image, then the heartbeat control channel traffic can be handled in a differential manner as compared to the traffic handling implemented for a second version service processor image. For example, the service controller heartbeat processing elements can detect that the service processor is a first version service processor and can then route the heartbeat traffic through a different set of security processes that do not rely on all the security aspects present in a second version service processor. As another example, the first version service processor can be a widely distributed software image that does not have unique encryption on the heartbeat channel and can be handled differentially, such as handled with a different server designed to handle insecure traffic and designed to not be disposed or easily exposed to mass or other security attacks (e.g., DoS, DDS attacks, and other types of security related and/or mass/large scale attacks against a network element, such as a download server or web/application server).

In some embodiments, a device supports two or more operating systems (e.g., different versions of operating systems and/or different operating systems) and for each operating system includes a compatible service processor. For example, when a dual boot configured device boots in a first operating system version, then a first service processor that is compatible with that first operating system version is selected for network access, and when the dual boot configured device boots in a second operating system version, then the second service processor that is compatible with that second operating system version is selected for network access.

In some embodiments, initial network access for a device is directed to a service controller (e.g., service control 150), service processor downloader (e.g., service processor download 170), and/or similar network element for managing service control. In some embodiments, initial network access is restricted to this initial network access to the service controller, service processor downloader, and/or similar network element for managing service control. In some embodiments, such initial network access is restricted until the device has been verified for network access, as similarly discussed herein with respect to various embodiments. In some embodiments, such initial network access is restricted until the device has been verified for network access and an appropriate service processor has been verified on the device and/or downloaded and installed on the device, as similarly discussed herein with respect to various embodiments. In some embodiments, such initial network access is restricted using various techniques, such as using a first version of a service processor on the device that restricts such initial network access. In some embodiments, such initial network access is restricted to and maintained in probation mode, as similarly described herein (e.g., a restricted IP address can be used for the service controller or other network element for service control instead of the secured service controller IP addresses reserved for validated and non-probation mode service processors, which, for example, can reduce the risks of various security risks, such as DoS, DDS, and/or other mass attacks against publicly or other more easily accessible service controller or download servers). For example, such initial network access can include access to a common activation server, which the device can access for determination of a supported configuration for a new or second service processor image download. As another example, such initial network access can direct the device to an initial web page including access to a service plan offer and purchase options (e.g., providing for a device credential look up for device group, provide choices of programs to user, or other service plan offer and purchase options). As another example, the initial web page can include access to a service plan offer and purchase options and a service processor verification and download/update function.

In some embodiments, a network based charging data record (CDR) feed, as described herein with respect to various embodiments, is provided for monitoring service usage by managed devices. In some embodiments, the CDR feed includes device generated CDRs or micro-CDRs generated by the service processor (e.g., service processor 115 can generate CDRs for monitored service usage on the device, which can, for at least some CDRs, include unique transaction codes for uniquely identifying the monitored service usage based on service or other categorizations/criteria) on the device (e.g., a mobile device or an intermediate networking device for that mobile device). In some embodiments, the CDR feed is a real-time (e.g., near real-time) network based CDR feed provided for determining whether any devices have been compromised (e.g., a hack of a first version or second version service processor providing for unrestricted service usage for such devices, and/or any other mass or security attack or vulnerability or exploit). For example, such a CDR feed can be used to determine abnormal or unusual traffic patterns and/or service level usage activities, which, for example, can be used to identify and/or protect against a DoS/DDS attack or other types of security attacks.

In some embodiments, based on various device and/or network based monitoring techniques, as described herein with respect to various embodiments, a determination is made that the service processor (e.g., service processor 115) is not functioning properly (e.g., may have been damaged and/or compromised/tampered with and, for example, allowing network access beyond the device's associated service plan and/or not properly monitoring/billing for such service usage) and that a new/replacement service processor should be downloaded. In some embodiments, a new/replacement service processor can be downloaded and installed in such situations, using the various techniques described herein with respect to various embodiments. In some embodiments, based on various criteria (e.g., service usage monitoring, billing, and/or any other criteria) or based on proactive and/or periodic administrative/security measures, a new/replacement service processor can be downloaded and installed, using the various techniques described herein with respect to various embodiments.

In some embodiments, based on, for example, service plan changes (e.g., user changes to their service plan), service provider changes (e.g., service provider changes to their services/service policies or the associated service plan), device changes (e.g., operating system version or other software platform changes or various hardware changes), a new service processor can be downloaded and installed or the installed service processor can be updated, using the various techniques described herein with respect to various embodiments.

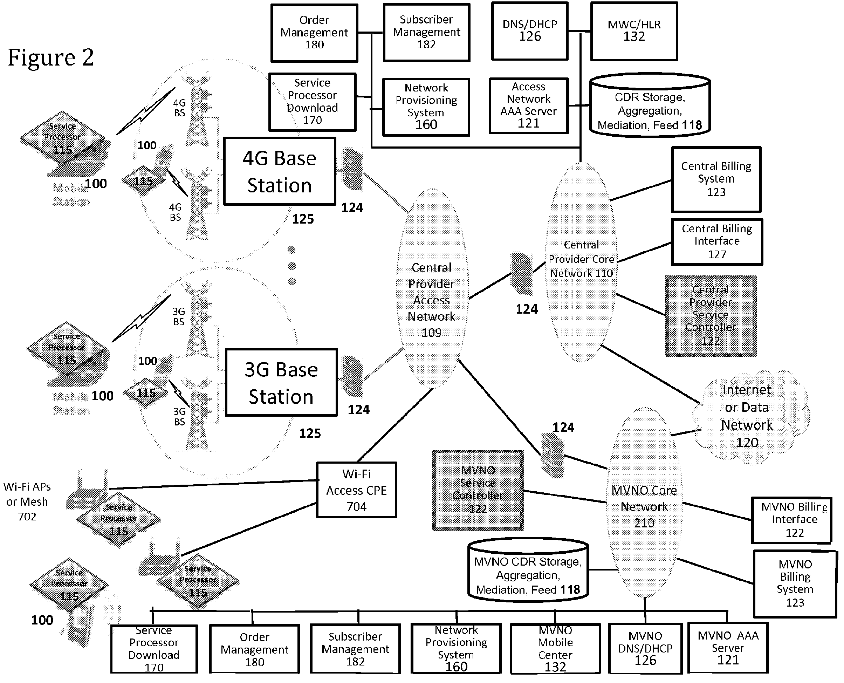

**Figure 2** illustrates another wireless network architecture for providing DAS install techniques in accordance with some embodiments. As shown, Figure 2 includes a 4G/3G/2G wireless network operated by, for example, a central provider. As shown, various wireless mobile devices 100 are in communication with base stations 125 for wireless network communication with the wireless network, and other devices 100 are in communication with Wi-Fi Access Points (APs) or Mesh 702 for wireless communication to Wi-Fi Access CPE 704 in communication with central provider access network 109. In some embodiments, each of the mobile devices 100 includes a service processor 115 (as shown), which, for example, can be initially installed, downloaded, and/or updated service processors (e.g., first/second version service processor images) using service processor download function 170 as described herein, and each service processor 115 connects through a secure control plane link to a service controller 122. In some embodiments, the service processor download function 170 is located elsewhere in the network or partially located in elsewhere or integrated with/as part of other network elements as will be apparent to one of ordinary skill in the art in view of the various embodiments disclosed herein.

In some embodiments, service usage information includes network based service usage information (e.g., charging data records (CDRs)), which is obtained from one or more network elements. In some embodiments, service usage information includes micro-CDRs provided by the service processor (e.g., service processor 115) installed on the device (e.g., mobile device 100). In some embodiments, micro-CDRs are used for CDR mediation or reconciliation that provides for service usage accounting on any device activity that is desired, as described herein with respect to various embodiments. In some embodiments, each device activity that is desired to be associated with a billing event is assigned a micro-CDR transaction code, and the service processor 115 is programmed to account for that activity associated with that transaction code. In some embodiments, the service processor 115 periodically reports (e.g., during each heartbeat or based on any other periodic, push, and/or pull communication technique(s)) micro-CDR usage measures to, for example, the service controller 122 or some other network element. In some embodiments, the service controller 122 reformats the heartbeat micro-CDR usage information into a valid CDR format (e.g., a CDR format that is used and can be processed by an SGSN or GGSN) and then transmits it to an authorized network element for CDR mediation (e.g., CDR storage, aggregation, mediation, feed 118, billing system 123, and/or billing interface 127 or another authorized network element/function). In some embodiments, CDR mediation is used to account for the micro-CDR service usage information by depositing it into an appropriate service usage account and deducting it from the user device bulk service usage account. For example, this technique provides for a flexible service usage billing solution that uses pre-existing solutions for CDR mediation and billing. For example, the billing system (e.g., billing system 123 and/or billing interface 127) processes the mediated CDR feed from CDR storage, aggregation, mediation, feed 118, applies the appropriate account billing codes to the aggregated micro-CDR information that was generated by the device, and then generates billing events in a manner that does not require changes to billing systems and/or billing infrastructure (e.g., using new transaction codes to label the new device assisted billing capabilities).

As shown in Figure 2, a CDR storage, aggregation, mediation, feed 118 is provided. In some embodiments, the CDR storage, aggregation, mediation, feed 118 receives, stores, aggregates and mediates micro-CDRs received from mobile devices 100. In some embodiments, the CDR storage, aggregation, mediation, feed 118 also provides a settlement platform using the mediated micro-CDRs, as described herein with respect to various embodiments. In some embodiments, another network element provides the settlement platform using aggregated and/or mediated micro-CDRs (e.g., central billing interface 127 and/or another network element). In some embodiments, various techniques for partitioning of device groups are used for partitioning the mobile devices 100 (e.g., allocating a subset of mobile devices 100 for a distributor, an OEM, a MVNO, and/or another partner). As also shown in Figure 2, a MVNO core network 210 also includes a MVNO CDR storage, aggregation, mediation, feed 118, a MVNO billing interface 122, and a MVNO billing system 123. In some embodiments, the MVNO CDR storage, aggregation, mediation, feed 118 receives, stores, aggregates and mediates micro-CDRs received from mobile devices 100 (e.g., MVNO group partitioned devices).

Those of ordinary skill in the art will appreciate that various other network architectures can be used for providing DAS install techniques, and Figure 2 is illustrative of just one such example network architecture for which DAS install techniques described herein can be provided.

In some embodiments, CDR storage, aggregation, mediation, feed 118 (e.g., service usage 118, including a billing aggregation data store and rules engine) is a functional descriptor for, in some embodiments, a device/network level service usage information collection, aggregation, mediation, and reporting function located in one or more of the networking equipment apparatus/systems attached to one or more of the sub-networks shown in Figure 2 (e.g., central provider access network 109 and/or central provider core network 110), which is in communication with the service controller 122, and a central billing interface 127. As shown, service usage 118 provides a function in communication with the central provider core network 110. In some embodiments, the CDR storage, aggregation, mediation, feed 118 function is located elsewhere in the network or partially located in elsewhere or integrated with/as part of other network elements. In some embodiments, CDR storage, aggregation, mediation, feed 118 functionality is located or partially located in the AAA server 121 and/or the mobile wireless center/Home Location Register (HLR) 132 (as shown, in communication with a DNS/DHCP server 126). In some embodiments, service usage 118 functionality is located or partially located in the base station, base station controller and/or base station aggregator, collectively referred to as base station 125 in Figure 2. In some embodiments, CDR storage, aggregation, mediation, feed 118 functionality is located or partially located in a networking component in the central provider access network 109, a networking component in the core network 110, the central billing system 123, the central billing interface 127, and/or in another network component or function. This discussion on the possible locations for the network based and device based service usage information collection, aggregation, mediation, and reporting function (e.g., CDR storage, aggregation, mediation, feed 118) can be easily generalized as described herein and as shown in the other figures described herein as would be apparent to one of ordinary skill in the art. Also as shown in Figure 2, the service controller 122 is in communication with the central billing interface 127 (also sometimes referred to as the external billing management interface or billing communication interface), which is in communication with the central billing system 123. As shown, an order management 180 and a subscriber management 182 are also in communication with the central provider core network 110 for facilitating order and subscriber management of services for the devices 100 in accordance with some embodiments, and a network provisioning system 160 is also provided in communication with the central provider core network 110 for facilitating network provisioning functions.

In some embodiments, the CDR storage, aggregation, mediation, feed 118 (and/or other network elements or combinations of network elements) provides a device/network level service usage information collection, aggregation, mediation, and reporting function. In some embodiments, the CDR storage, aggregation, mediation, feed 118 (and/or other network elements or combinations of network elements) collects device generated usage information for one or more devices on the wireless network (e.g., devices 100); and provides the device generated usage information in a syntax and a communication protocol that can be used by the wireless network to augment or replace network generated usage information for the one or more devices on the wireless network. In some embodiments, the syntax is a charging data record (CDR), and the communication protocol is selected from one or more of the following: 3GPP, 3GPP2, or other communication protocols. In some embodiments, as described herein, the CDR storage, aggregation, mediation, feed 118 collects/receives micro-CDRs for one or more devices on the wireless network (e.g., devices 100). In some embodiments, the CDR storage, aggregation, mediation, feed 118 (and/or other network elements or combinations of network elements) includes a service usage data store (e.g., a billing aggregator) and a rules engine for aggregating the collected device generated usage information. In some embodiments, the network device is a CDR feed aggregator, and the CDR storage, aggregation, mediation, feed 118 (and/or other network elements or combinations of network elements) also aggregates CDRs and/or micro-CDRs for the one or more devices on the wireless network; applies a set of rules to the aggregated CDRs and/or micro-CDRs using a rules engine (e.g., bill by account, transactional billing, revenue sharing model, and/or any other billing or other rules for service usage information collection, aggregation, mediation, and reporting), and communicates a new set of CDRs for the one or more devices on the wireless network to a billing interface or a billing system (e.g., providing a CDR with a billing offset by account/service).

In some embodiments, the CDR storage, aggregation, mediation, feed 118 (and/or other network elements or combinations of network elements) communicates a new set of CDRs (e.g., aggregated and mediated CDRs and/or micro-CDRs that are then translated into standard CDRs) for the one or more devices on the wireless network to a billing interface (e.g., central billing interface 127) or a billing system (e.g., central billing system 123). In some embodiments, the CDR storage, aggregation, mediation, feed 118 (and/or other network elements or combinations of network elements) communicates with a service controller (e.g., service controller 122) to collect the device generated usage information (e.g., micro-CDRs) for the one or more devices on the wireless network. In some embodiments, the CDR storage, aggregation, mediation, feed 118 (and/or other network elements or combinations of network elements) communicates with a service controller, in which the service controller is in communication with a billing interface or a billing system. In some embodiments, the CDR storage, aggregation, mediation, feed 118 (and/or other network elements or combinations of network elements) communicates the device generated usage information to a billing interface or a billing system. In some embodiments, the CDR storage, aggregation, mediation, feed 118 (and/or other network elements or combinations of network elements) communicates with a transport gateway (not shown) and/or a Radio Access Network (RAN) gateway (not shown) to collect the network generated usage information for the one or more devices on the wireless network. In some embodiments, the service controller 122 communicates the device generated service usage information (e.g., micro-CDRs) to the CDR storage, aggregation, mediation, feed 118 (and/or other network elements or combinations of network elements).

In some embodiments, the CDR storage, aggregation, mediation, feed 118 (and/or other network elements or combinations of network elements) performs rules for performing a bill by account aggregation and mediation function. In some embodiments, the CDR storage, aggregation, mediation, feed 118 (and/or other network elements or combinations of network elements) performs rules for performing a service billing function, as described herein, and/or for performing a service/transactional revenue sharing function, as described herein. In some embodiments, the service controller 122 in communication with the CDR storage, aggregation, mediation, feed 118 (and/or other network elements or combinations of network elements) performs a rules engine for aggregating and mediating the device generated usage information (e.g., micro-CDRs). In some embodiments, a rules engine device in communication with the CDR storage, aggregation, mediation, feed 118 (and/or other network elements or combinations of network elements) performs a rules engine for aggregating and mediating the device generated usage information.

In some embodiments, the rules engine is included in (e.g., integrated with/part of) the CDR storage, aggregation, mediation, feed 118. In some embodiments, the rules engine and associated functions, as discussed herein, is a separate function/device. In some embodiments, the service controller 122 performs some or all of these rules engine based functions, as discussed herein, and communicates with the central billing interface 127. In some embodiments, the service controller 122 performs some or all of these rules engine based functions, as discussed herein, and communicates with the central billing system 123.

In some embodiments, duplicate CDRs are sent from the network equipment to the billing system 123 that is used for generating service billing. In some embodiments, duplicate CDRs are filtered to send only those CDRs/records for devices controlled by the service controller and/or service processor (e.g., managed devices). For example, this approach can provide for the same level of reporting, lower level of reporting, and/or higher level of reporting as compared to the reporting required by the central billing system 123.

In some embodiments, the service controller 122 sends the device generated CDRs to the rules engine (e.g., service usage 118), and the rules engine applies one or more rules, such as those described herein and/or any other billing/service usage related rules as would be apparent to one of ordinary skill in the art. In some embodiments, the service controller 122 generates CDRs similar to other network elements, and the rules (e.g., bill-by-account) are performed in the central billing interface 127. For example, for the service controller 122 to generate CDRs similar to other network elements, in some embodiments, the service controller 122 is provisioned on the wireless network and behaves substantially similar to other CDR generators on the network) as would be apparent to one of ordinary skill in the art.

In some embodiments, the service controller 122 is provisioned as a new type of networking function that is recognized as a valid and secure source for CDRs by the other necessary elements in the network (e.g., CDR storage, aggregation, mediation, feed 118). In some embodiments, where the network necessary apparatus will only recognize CDRs from certain types of networking equipment (e.g. a RAN gateway or transport gateway), then the service controller 122 can provide authentication credentials to the other networking equipment that indicate it is one of the approved types of equipment. In some embodiments, the link between the service controller 122 and the necessary CDR aggregation and mediation equipment is secured, authenticated, encrypted, and/or signed.

In some embodiments, the CDR storage, aggregation, mediation, feed 118 discards the network based service usage information (e.g., network based CDRs) received from one or more network elements. In these embodiments, the service controller 122 can provide the device based service usage information (e.g., device based CDRs or micro-CDRs) to the CDR storage, aggregation, mediation, feed 118 (e.g., the CDR storage, aggregation, mediation, feed 118 can just provide a store, aggregate, and communication function(s)), and the device based service usage information is provided to the central billing interface 127 or the central billing system 123.

In some embodiments, the device based CDRs (e.g., micro-CDRs) and/or new CDRs generated based on execution of a rules engine as described herein are provided only for devices that are managed and/or based on device group, service plan, or any other criteria, categorization, and/or grouping, such as based on ambient service or ambient service provider or transactional service or transactional service provider.

In some embodiments, based on, for example, service plan changes (e.g., user changes to their service plan), service provider changes (e.g., service provider changes to their services/service policies or the associated service plan), micro-CDR transaction code changes, and/or any other related changes, a new service processor can be downloaded and installed or the installed service processor can be updated to allow, for example, the tracking of one or more service usage activities by the device using micro-CDRs (e.g., for new or previously unmonitored/untracked service usage activities, using, for example, new or updated micro-CDR transaction codes (uniquely) associated with such service usage activities), using the various techniques described herein with respect to various embodiments.

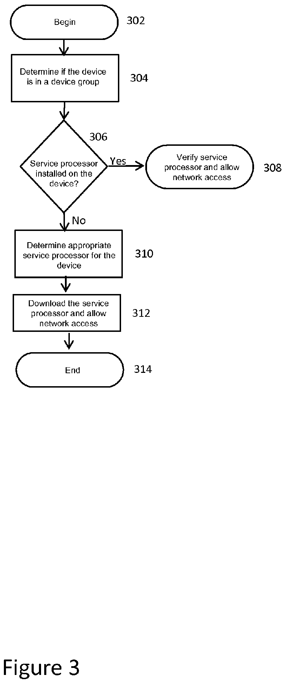

**Figure 3** illustrates a flow diagram for DAS install techniques in accordance with some embodiments. At 302, the process begins. At 304, whether a device (e.g., mobile device 100) is in a device group is determined. At 306, whether the device includes a service processor is determined. If so, at 308, then the installed service processor is verified (e.g., up to date and/or validated for that device, device group, and/or associated service plan) and network access is allowed (e.g., managed/monitored by the installed and verified service processor according to the associated service plan for the device). Otherwise (e.g., the device does not have an installed service processor), at 310, then an appropriate service processor for the device is determined (e.g., based on the device type, device group, and/or version, such as hardware/software platform of the device, an associated service plan, service provider, and/or any other criteria or settings). At 312, the service processor is downloaded and installed (e.g., using a bootstrap process or other techniques, as described herein with respect to various embodiments) and network access is allowed (e.g., managed/monitored by the installed service processor according to the associated service plan for the device).

In some embodiments, the device is also directed to, for example, an activation server to, for example, authenticate the device and/or verify a service processor for the device (e.g., ensure that a current and verified service processor version is installed and/or download a current and verified service processor version for the device) prior to allowing such network access. For example, a DAS install client can be downloaded (e.g., using bootstrapping or other/similar techniques, from a download server and/or from a website) that allows for secure connection from the device (e.g., mobile device 100) to a secure download server (e.g., service processor download 170) (e.g., support for a configuration of the device is determined, such as through a device query or device download of client verification software can be used to verify the device hardware/software configuration). In this example, a user/device validation step can also be performed. For example, an authorization process for a user sign-up can be performed (e.g., based on a user name, MAC address, Turing machine text verification, credit card verification, and/or other authorization/validation techniques), in which this can be performed automatically or the user/device can be required to enter certain credentials for authorization/validation. In some embodiments, the authorization process also includes various techniques for associating a user's identity with the device (e.g., using public key/TLS techniques, SSH techniques for TLS, and/or identity management techniques). In this example, a check can also be performed to determine if the device was previously and/or is currently an activated device (e.g., the device is already associated with a service plan). For example, whether the device belongs to a registered device group can be determined, and if not, then the default settings for that type of device can be applied. In some embodiments, the service processor is encrypted, hashed, and/or obfuscated based on the previous determination (e.g., device group association and/or default device settings). In some embodiments, if the device is not associated with a service plan (e.g., based on the device look-up using device based unique identifier(s)/credential(s), as described herein), then the device can be redirected to a service portal for an activation offer for a service plan (e.g., using an activation server). In some embodiments, the portal utilizes header information to indicate that the device is a managed device (e.g., for a given service provider, MVNO, or other service partner) in the portal request to proxy to an appropriate proxy server for that service provider for the activation process. At 314, the process is completed.

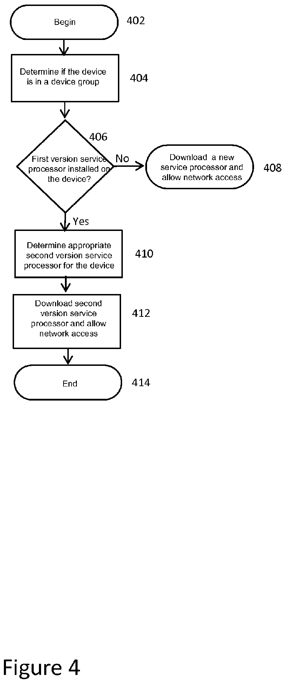

**Figure 4** illustrates another flow diagram for DAS install techniques in accordance with some embodiments. At 402, the process begins. At 404, whether a device (e.g., mobile device 100) is in a device group is determined (e.g., or other list that indicates that this device includes an installed, up to date, and/or validated service processor, and, for example, to also verify that the SIM, ESN, or other unique device identifier is registered, such as in an HLR/NIR database, as associated with service settings/policies for that device for service access). At 406, whether the device includes a first version service processor is determined. If not (e.g., the device does not have an installed first version service processor), at 408, then a new service processor is downloaded (e.g., as similarly discussed above with respect to Figure 3) and network access is allowed (e.g., managed/monitored by the installed new service processor according to the associated service plan for the device). Otherwise (e.g., the device includes an installed first version service processor), then at 410, an appropriate second version service processor for the device is determined (e.g., based on the device type and version, such as hardware/software platform, device group, an associated service plan, service provider, and/or any other criteria or settings). At 412, the second version service processor (e.g., secured for the device, using various techniques, as described herein) is downloaded and installed (e.g., using bootstrapping or other/similar techniques, as described herein), or in some embodiments, the first version of the service processor is updated to provide a second version service processor uniquely associated with the device, and network access is allowed (e.g., managed/monitored by the installed second version service processor according to the associated service plan for the device). At 414, the process is completed.

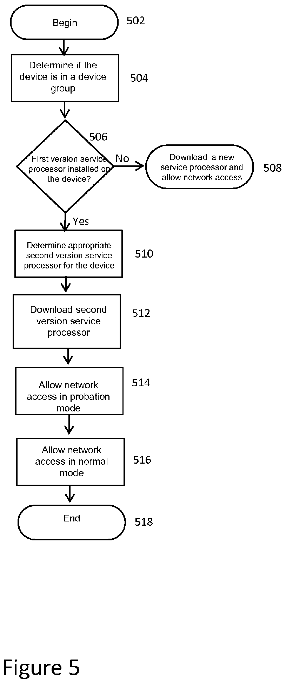

**Figure 5** illustrates another flow diagram for DAS install techniques in accordance with some embodiments. At 502, the process begins. At 504, whether a device (e.g., mobile device 100) is in a device group is determined (e.g., as similarly described above with respect to Figure 3). At 506, whether the device includes a first version service processor is determined. If not (e.g., the device does not have an installed first version service processor), at 508, then a new service processor is downloaded (e.g., as similarly discussed above with respect to Figure 3) and network access is allowed (e.g., managed/monitored by the installed new service processor according to the associated service plan for the device). Otherwise (e.g., the device includes an installed first version service processor), at 410, then an appropriate second version service processor for the device is determined (e.g., based on the device type and version, such as hardware/software platform, device group, an associated service plan, service provider, and/or any other criteria or settings). At 512, the second version service processor (e.g., secured using various techniques, as described herein) is downloaded and installed (e.g., using a bootstrap process or other/similar techniques, as described herein). At 514, network access is allowed in probation mode, as described herein with respect to various embodiments. For example, the device can be managed in probation mode after the new/second version service processor install (e.g., service control communication can be limited to a particular set of probation mode IP addresses that can be used for the service controller or other network element for service control instead of the secured service controller IP addresses reserved for validated and non-probation mode service processors, which, for example, can reduce the risks of various security risks, such as DoS, DDS, or other mass or other security attacks against publicly or other more easily accessible service controller or download servers). In some embodiments, while in probation mode, the service processor executes more robust service monitoring techniques (e.g., more frequent and/or more robust service integrity checks and/or more frequent heartbeats, for example, to monitor actual device/user behavior with the associated expected behavior). At 516, after the probation period is completed (e.g., based on time, monitored activities, and/or any other criteria), network access is allowed in normal mode (e.g., the device is no longer operating in the probation mode, as described herein). For example, after a probation period is completed (e.g., based on time, monitored activities, and/or any other criteria), the device is provided access based on the associated service plan, which is managed, at least in part, by the service processor in communication with, for example, a service controller or other network element for service control. At 518, the process is completed.

In some embodiments, the device OS requires a pre-registered and signed version of the service processor software in order for the OS to allow the service processor to be installed or updated. In such embodiments, a sequence of pre-registered, pre-signed service processor software versions that have differing security parameters (e.g. encryption, signature, obfuscation, differences in code sequences, information for query - response sequences, and/or other security parameters) are provided. In some embodiments, the pre-registered service processors are used to regularly update the service processor software for a portion of devices connected to the network, or for all devices connected to the network. In some embodiments, a specific version of the service processor is assigned to a given device, and other versions with other security parameters will not be allowed to obtain service from the network. For example, more than one version of the software can be registered and distributed at any one time so that a hacker cannot create code that works for all devices. A sequence of service processor versions can be held in reserve and deployed when a successful software hack version is detected in the field for one or more previous service processor versions, and the new versions that have been held in reserve can be used to update devices in the field. As the reserved versions have not yet been distributed prior to the detection of a successful hack, it is not possible for a hacker to have a hacked version of the new software, and by refreshing new versions on a frequent basis it can become impossible for a hacker to successfully hack the new versions before additional new versions are deployed. Such embodiments can buy time by keeping successful software hacks out of the devices in the field until the successful software hack can be analyzed and a systematic security solution implemented to prevent the hack from remaining effective.

In some embodiments not all of the service processor software is modified into pre-registered modified security configuration versions that are regularly refreshed, but instead a portion of the service processor software that includes unique security information (e.g., security keys, signatures and/or responses to secure queries, and/or other security information, and/or the capability to analyze the integrity of the other service processor software). In this manner, when a device is suspected of being hacked the new service processor software portion with different security configuration can be updated and used to ascertain the integrity of the existing service processor configuration, which makes the update process shorter and lower bandwidth.

Although the foregoing embodiments have been described in some detail for purposes of clarity of understanding, the invention is not limited to the details provided. There are many alternative ways of implementing the invention. The disclosed embodiments are illustrative and not restrictive.

The application also discloses the following subject matter:
1. A system, comprising:
   a processor of a network device configured to:
      determine if a communications device in communication with a wireless network includes a service processor for assisting control of the communications device use of a service on the wireless network, wherein the service processor includes a service profile that includes a plurality of service policy settings, and wherein the service profile is associated with a service plan that provides for access to the service; and
      verify the service processor; and
   a memory of the network device coupled to the processor and configured to provide the processor with instructions.
2. The system recited in item 1, wherein the service processor is uniquely associated with the communications device.
3. The system recited in item 1, wherein the communications device is activated prior to a point of sale of the communications device, and the service plan is associated with the communications device during activation.
4. The system recited in item 1, wherein the service plan is associated with the communications device during one or more of the following: a manufacture of the communications device, a distribution of the communications device, or a point of sale of the communications device.
5. The system recited in item 1, wherein the service plan is an ambient service plan that provides a low cost or free trial service plan that is bundled or provided as an option for purchase at a point of sale of the communications device.
6. The system recited in item 1, wherein the communications device includes a plurality of service processors for supporting a plurality of operating systems and/or service plans.
7. The system recited in item 1, wherein the communications device is a mobile communications device or an intermediate networking device, and the service includes one or more Internet based services.
8. The system recited in item 1, wherein the communications device is a mobile communications device, and the service includes one or more Internet based services, and wherein the mobile communications device includes one or more of the following: a mobile phone, a PDA, an eBook reader, a music device, an entertainment/gaming device, a computer, laptop, a netbook, a tablet, and a home networking system.
9. The system recited in item 1, wherein the communications device includes a modem, and the processor is located in the modem.
10. The system recited in item 1, wherein the service policy settings include one or more of the following: access control settings, traffic control settings, billing system settings, user notification with acknowledgement settings, user notification with synchronized service usage information, user privacy settings, user preference settings, authentication settings, admission control settings, application access settings, content access settings, transaction settings, and network or device management communication settings.
11. The system recited in item 1, wherein the implementation of the first service profile is verified based on one or more of the following: device generated service usage information and network generated service usage information.
12. The system recited in item 1, wherein the communications device does not include the service processor, and the processor of the network device is further configured to:
   download the service processor to the communications device.
13. The system recited in item 1, wherein the communications device does not include the service processor, and the processor of the network device is further configured to:
   download a service processor to the communications device using a bootstrapper.
14. The system recited in item 1, wherein the communications device includes the service processor, and the processor of the network device is further configured to:
   update the service processor.
15. The system recited in item 1, wherein the communications device includes the service processor, and the processor of the network device is further configured to:
   download a replacement service processor.
16. The system recited in item 1, wherein the communications device includes a first version service processor, and the processor of the network device is further configured to:
   download a second version service processor.
17. The system recited in item 1, wherein the communications device includes a first version service processor, and the processor of the network device is further configured to:
   download a second version service processor, wherein the second version service processor is uniquely associated with the communications device.
18. The system recited in item 1, wherein the communications device includes a first version service processor, and the processor of the network device is further configured to:
   determine a device group associated with the communications device; and
   download a second version service processor based on the device group.
19. The system recited in item 1, wherein the communications device includes a first version service processor, and the processor of the network device is further configured to:
   determine a device group associated with the communications device; and
   download a second version service processor based on the device group, wherein the second version service processor is uniquely associated with the communications device based on one or more device credentials of the communications device.
20. The system recited in item 1, wherein the communications device includes a first version service processor, and the processor of the network device is further configured to:
   download a second version service processor, wherein the second version service processor is uniquely associated with the communications device based on one or more device credentials of the communications device and user information associated with a temporary user account.
21. The system recited in item 1, wherein the communications device includes a first version service processor, and the processor of the network device is further configured to:
   download a service processor update, wherein the service processor update includes one or more updates to the first version service processor.
22. The system recited in item 1, wherein the communications device includes a first version service processor, and the processor of the network device is further configured to:
   download a service processor update, wherein the service processor update includes one or more settings changes to the first version service processor.
23. The system recited in item 1, wherein the communications device includes a first version service processor, and the processor of the network device is further configured to:
   download a service processor update, wherein the service processor update includes one or more encryption or obfuscation computations to perform on the first version service processor to provide a second version of the service processor that is uniquely associated with the communications device, a communications device user, a device group associated with the communications device, and/or the service plan associated with the communications device.
24. The system recited in item 1, wherein the communications device includes a first version service processor, and the processor of the network device is further configured to:
   download a second version service processor, wherein the second version service processor is uniquely associated with the communications device, and wherein the second version service processor includes one or more restricted IP addresses providing for access to a service controller reserved for verified and non-probation mode service processors.
25. The system recited in item 1, wherein the communications device includes a first version service processor that allows for limited access to the wireless network for purposes of service control and for permitting selection of a new service plan, and the processor of the network device is further configured to:
   download a second version service processor based on a new service plan selection for the communications device, wherein the second version service processor is uniquely associated with the communications device.
26. The system recited in item 1, wherein the communications device includes a first version service processor, and the processor of the network device is further configured to:
   download a second version service processor, wherein the second version service processor facilitates a dual boot configuration that provides support for a plurality of operating systems executed on the communications device.
27. The system recited in item 1, wherein the service plan includes an option to purchase a new service plan for the communications device, wherein the new service plan includes additional service capabilities, and wherein the processor of the network device is further configured to:
   download a new service processor to the communications device, wherein the new service processor is associated with the new service plan.
28. The system recited in item 1, wherein the communications device includes the service processor, and the processor of the network device is further configured to:
   download a new service processor based on one or more of the following: a new service plan selection, an indication of tampering with the service processor, an update availability for the service processor, and a periodic service processor verification request.
29. The system recited in item 1, wherein the processor of the network device is further configured to:
   allow the communications device access to the service in a probation mode, wherein the communications device is initially in a probation mode that allows for access to the service with increased service monitoring and/or limited service capabilities that are limited based on one or more of the following: period of time, network address, service type, content type, application type, bandwidth, and data usage.
30. The system recited in item 1, wherein the processor of the network device is further configured to:
   periodically download an updated or replacement service processor to the communications device.
31. A method, comprising:
   determining if a communications device in communication with a wireless network includes a service processor for assisting control of the communications device use of a service on the wireless network, wherein the service processor includes a service profile that includes a plurality of service policy settings, and wherein the service profile is associated with a service plan that provides for access to the service; and
   verifying the service processor.
32. A computer program product, the computer program product being embodied in a computer readable storage medium and comprising computer instructions for:
   determining if a communications device in communication with a wireless network includes a service processor for assisting control of the communications device use of a service on the wireless network, wherein the service processor includes a service profile that includes a plurality of service policy settings, and wherein the service profile is associated with a service plan that provides for access to the service; and
   verifying the service processor.

## Claims

1. An end-user mobile device (100) comprising:
a cellular network modem; and
means for including secure credentials;
one or more device service processors (115) configured to initiate an activation sequence, the activation sequence automatically triggered by one or more of the service processors (115) when
(i) the mobile device (100) is configured to use pre-activation credentials from the means for including secure credentials to access a first cellular access network through the cellular network modem, and
(ii) a user attempts to use the mobile device (100) in a manner that would require access to the Internet through the first cellular access network; and
wherein the one or more service processors (115) guide the activation sequence such that
the mobile device (100) connects to an activation server through the cellular network modem and the first cellular access network, using the pre-activation credentials from the means for including secure credentials,
the mobile device (100) receives, from the activation server over the first cellular access network, a set of multiple cellular network service options, including for each of multiple cellular network service carriers at least one option for activating service on that service carrier,
the mobile device (100) accepts input from the user to select a first one of the cellular network service options for a first one of the cellular network service carriers and request activation of the first service option,
the mobile device (100) forwards, based on the input, an activation request for the first service option to the activation server,
the mobile device (100) receives from the activation server a set of permanent credentials corresponding to the first service option and first service carrier and automatically stores the permanent credentials in the means for including secure credentials so as to supersede the pre-activation credentials, and
the mobile device (100) uses the set of permanent credentials to connect to a second cellular access network corresponding to the set of permanent credentials.

2. The end-user mobile device (100) of claim 1, wherein the pre-activation credentials are associated with an ambient service policy that limits Internet data access through the first cellular access network to access to the activation server, at least some aspects of the ambient service policy stored on the mobile device (100) and enforced by the service processors (115).

3. The end-user mobile device (100) of claim 2, wherein the permanent credentials are associated with a data service policy that allows Internet data access not allowed by the ambient service policy, at least some aspects of the data service policy received by the mobile device (100) as a result of the activation request, stored on the mobile device (100), and enforced by the service processors (115).

4. The end-user mobile device (100) of claim 2, wherein the pre-activation credentials and aspects of the ambient service policy are pre-installed on the mobile device (100).

5. The end-user mobile device (100) of claims 1 - 4, wherein the means for including secure credentials is at least partially resident on a Subscriber Identity Module (SIM) installed in the mobile device (100).

6. The end-user mobile device of claim 5, wherein the pre-activation credentials associate the mobile device (100) with a service provider operating the activation server.

7. The end-user mobile device (100) of claims 1 - 6, wherein the mobile device (100) stores the permanent credentials in the means for including secure credentials so as to supersede the pre-activation credentials comprises the device stores, in a Subscriber Identity Module installed on the device, an indication of the first service carrier and a secure certificate or signature.

8. The end-user mobile device (100) of claims 1 - 7, wherein the service processors (115) configured to automatically trigger the activation sequence based in part of when the user attempts to use the device in a manner that would require access to the Internet through the first cellular access network comprises the service processors (115) configured to detect and respond to a first attempt to access the Internet through the first cellular access network.

9. A method of operation in an end-user mobile device (100) comprising:
initiating an activation sequence, the activation sequence automatically triggered when the mobile device (100) is configured to use pre-activation credentials from a means for including secure credentials to access a first cellular access network, and a user attempts to use the mobile device (100) in a manner that would require access to the Internet through the first cellular access network;
as part of the activation sequence,
connecting to an activation server through the first cellular access network, using the pre-activation credentials from the secure credential memory,
receiving, from the activation server over the first cellular access network, a set of multiple cellular network service options, including for each of multiple cellular network service carriers at least one option for activating service on that service carrier,
accepting user input to select a first one of the cellular network service options for a first one of the cellular network service carriers and request activation of the first service option,
forwarding, based on the user input, an activation request for the first service option to the activation server,
receiving, from the activation server, a set of permanent credentials corresponding to the first service option and first service carrier and automatically storing the permanent credentials in the means for including secure credentials so as to supersede the pre-activation credentials; and
subsequently using the set of permanent credentials to connect to a second cellular access network corresponding to the set of permanent credentials.

10. The method of operation of claim 9, wherein the pre-activation credentials are associated with an ambient service policy that limits Internet data access through the first cellular access network to access to the activation server, the method further comprising enforcing at least some aspects of the ambient service policy that are stored on the mobile device (100).

11. The method of operation of claim 10, wherein the permanent credentials are associated with a data service policy that allows Internet data access not allowed by the ambient service policy, the method further comprising receiving at least some aspects of the data service policy as a result of the activation request, storing the aspects of the data service policy on the device, and enforcing the aspects of the data service policy.

12. The method of operation of claim 10, wherein the pre-activation credentials and aspects of the ambient service policy are pre-installed on the mobile device (100) before the mobile device (100) is associated with a user.

13. The method of operation of claims 9 - 12, wherein the means for including secure credentials is at least partially resident on a Subscriber Identity Module (SIM) installed in the device.

14. The method of operation of claim 12 wherein the pre-activation credentials associate the mobile device (100) with a service provider operating the activation server.

15. An apparatus comprising a non-transitory computer readable medium comprising a set of computer instructions that, when executed or interpreted by a group of one or more processors in an end-user mobile device (100), cause the group of processors to perform the method according to claims 9-14.

## Patentansprüche

1. Mobilfunkgerät (100), Folgendes umfassend:
ein Mobilfunknetzmodem; und
Mittel zum Einschließen sicherer Anmeldedaten;
einen oder mehrere Geräte-Dienstprozessoren (115), konfiguriert zum Initiieren einer Aktivierungssequenz, wobei die Aktivierungssequenz automatisch durch einen oder mehrere der Dienstprozessoren (115) ausgelöst wird, wenn
(i) das Mobilfunkgerät (100) konfiguriert ist, um voraktivierte Anmeldedaten von den Mitteln zum Einschließen sicherer Anmeldedaten zu nutzen, um über das Mobilfunknetzmodem auf ein erstes Mobilfunkzugangsnetzwerk zuzugreifen, und
(ii) ein Benutzer versucht, das Mobilfunkgerät (100) in einer Weise zu verwenden, die Zugriff auf das Internet über das erste Mobilfunknetz erfordern würde; und
wobei der eine oder die mehreren Dienstprozessoren (115) die Aktivierungssequenz so führen, dass
das Mobilfunkgerät (100) über das Mobilfunknetzmodem und das erste Mobilfunknetz mit einem Aktivierungsserver verbindet, durch die Nutzung der voraktivierten Anmeldedaten von den Mitteln zum Einschließen sicherer Anmeldedaten,
das Mobilfunkgerät (100) von dem Aktivierungsserver über das erste Mobilfunknetz einen Satz von mehreren Mobilfunknetz-Dienstoptionen empfängt, wobei diese für jeden von mehreren Mobilfunknetz-Dienstanbietern mindestens eine Option zum Aktivieren des Dienstes bei diesem Dienstanbieter einschließt,
das Mobilfunkgerät (100) die Eingaben von dem Benutzer akzeptiert, um eine erste der Mobilfunknetz-Dienstoptionen für einen ersten der Mobilfunknetz-Dienstanbieter auszuwählen und die Aktivierung der ersten Dienstoption anzufordern,
das Mobilfunkgerät (100) basierend auf der Eingabe eine Aktivierungsanforderung für die erste Dienstoption an den Aktivierungsserver weiterleitet,
das Mobilfunkgerät (100) von dem Aktivierungsserver einen Satz von permanenten Anmeldedaten empfängt, die der ersten Dienstoption und dem ersten Dienstanbieter entsprechen, und die permanenten Anmeldedaten in den Mitteln zum Einschließen sicherer Anmeldedaten automatisch speichert, um die voraktivierten Anmeldedaten zu ersetzen, und
das Mobilfunkgerät (100) den Satz von permanenten Anmeldedaten verwendet, um sich mit einem zweiten Mobilfunknetz zu verbinden, das dem Satz von permanenten Anmeldedaten entspricht.

2. Mobilfunkgerät (100) nach Anspruch 1, wobei die voraktivierten Anmeldedaten einer Umgebungsdienstrichtlinie zugeordnet sind, die den Internet-Datenzugriff durch das erste Mobilfunknetz beschränkt, um auf den Aktivierungsserver zuzugreifen, wobei zumindest einige Aspekte der Umgebungsdienstrichtlinie auf dem Mobilfunkgerät (100) gespeichert sind und von den Dienstprozessoren (115) durchgeführt werden.

3. Mobilfunkgerät (100) nach Anspruch 2, wobei die permanenten Anmeldedaten einer Datendienstrichtlinie zugeordnet sind, die den Zugriff auf Internetdaten zulässt, der von der Umgebungsdienstrichtlinie nicht zugelassen wird, wobei zumindest einige Aspekte der Datendienstrichtlinie, die von dem Mobilfunkgerät (100) als Ergebnis der Aktivierungsanforderung empfangen wird, auf dem Mobilfunkgerät (100) gespeichert und durch die Dienstprozessoren (115) durchgeführt werden.

4. Mobilfunkgerät (100) nach Anspruch 2, wobei die voraktivierten Anmeldedaten und Aspekte der Umgebungsdienstrichtlinie auf dem Mobilfunkgerät (100) vorinstalliert sind.

5. Mobilfunkgerät (100) nach den Ansprüchen 1 bis 4, wobei das Mittel zum Einschließen gesicherter Anmeldedaten zumindest teilweise auf einem Subscriber Identity Module (SIM) vorhanden ist, das in dem Mobilfunkgerät (100) installiert ist.

6. Mobilfunkgerät nach Anspruch 5, wobei die voraktivierten Anmeldedaten das Mobilfunkgerät (100) einem Dienstanbieter zuordnen, der den Aktivierungsserver betreibt.

7. Mobilfunkgerät (100) nach den Ansprüchen 1 bis 6, wobei das Mobilfunkgerät (100) die permanenten Anmeldedaten in den Mitteln zum Einschließen sicherer Anmeldedaten speichert, um so die voraktivierten Anmeldedaten auf dem Gerät zu ersetzen, die in einem in dem Gerät installierten Suberscriber Identity Module gespeichert sind, eine Anzeige des ersten Dienstanbieters und ein(e) sichere(s) Zertifikat oder Signatur zu ersetzen.

8. Mobilfunkgerät (100) nach den Ansprüchen 1 bis 7, wobei die Dienstprozessoren (115) so konfiguriert sind, dass sie die Aktivierungssequenz teilweise basierend auf dem Versuch des Benutzers auslösen, das Gerät in einer Weise zu verwenden, die einen Zugriff auf das Internet über das erste Mobilfunknetz erfordern würde, das die Dienstprozessoren (115) umfasst, die konfiguriert sind, um einen ersten Versuch, über das erste Mobilfunknetz auf das Internet zuzugreifen, zu erkennen und darauf zu reagieren.

9. Betriebsverfahren in einem Mobilfunkgerät (100), Folgendes umfassend:
Initiierten einer Aktivierungssequenz, wobei die Aktivierungssequenz automatisch ausgelöst wird, wenn das Mobilfunkgerät (100) konfiguriert ist, um voraktivierte Anmeldedaten von einem Mittel zum Einschließen sicherer Anmeldedaten zu nutzen, um Zugang zu einem ersten Mobilfunknetz zu erhalten, und ein Benutzer versucht, das Mobilfunkgerät (100) in einer Weise zu verwenden, die Zugriff auf das Internet durch das erste Mobilfunknetz erfordern würde;
als Teil der Aktivierungssequenz,
Verbinden mit einem Aktivierungsserver durch das erste Mobilfunknetz, unter Verwendung der voraktivierten Anmeldedaten von dem Speicher für sichere Anmeldedaten,
Empfangen von einem Satz von mehreren Mobilfunknetz-Dienstoptionen von dem Aktivierungsserver über das erste Mobilfunknetz, wobei diese für jeden von mehreren Mobilfunknetz-Dienstanbietern mindestens eine Option zum Aktivieren des Dienstes bei diesem Dienstanbieter einschließt,
Akzeptieren der Eingaben von dem Benutzer, um eine erste der Mobilfunknetz-Dienstoptionen für einen ersten der Mobilfunknetz-Dienstanbieter auszuwählen und die Aktivierung der ersten Dienstoption anzufordern,
Weiterleiten, basierend auf der Benutzereingabe, einer Aktivierungsanforderung für die erste Dienstoption an den Aktivierungsserver,
Empfangen eines Satzes von permanenten Anmeldedaten durch den Aktivierungsserver, wobei die permanenten Anmeldedaten der ersten Dienstoption und dem ersten Dienstanbieter entsprechen, und automatisches Speichern der permanenten Anmeldedaten in den Mitteln zum Einschließen sicherer Anmeldedaten, um die voraktivierten Anmeldedaten zu ersetzen, und
anschließendes Verwenden des Satzes von permanenten Anmeldedaten, um sich mit einem zweiten Mobilfunknetz zu verbinden, entsprechend dem Satz von permanenten Anmeldedaten.

10. Betriebsverfahren nach Anspruch 9, wobei die voraktivierten Anmeldedaten einer Umgebungsdienstrichtlinie zugeordnet sind, die den Internet-Datenzugriff durch das erste Mobilfunknetz beschränkt, um auf den Aktivierungsserver zuzugreifen, wobei das Verfahren ferner das Durchführen von zumindest einigen Aspekten der Umgebungsdienstrichtlinie umfasst, die auf dem Mobilfunkgerät (100) gespeichert sind.

11. Betriebsverfahren nach Anspruch 10, wobei die permanenten Anmeldedaten einer Datendienstrichtlinie zugeordnet sind, die den Zugriff auf Internetdaten zulässt, der von der Umgebungsdienstrichtlinie nicht zugelassen wird, wobei das Verfahren ferner das Empfangen von mindestens einigen Aspekten der Datendienstrichtlinie umfasst, infolge der Aktivierungsanforderung, das Speichern der Aspekte der Datendienstrichtlinie auf dem Gerät und das Durchführen der Aspekte der Datendienstrichtlinie.

12. Betriebsverfahren nach Anspruch 10, wobei die voraktivierten Anmeldedaten und Aspekte der Umgebungsdienstrichtlinie auf dem Mobilfunkgerät (100) vorinstalliert sind, bevor das Mobilfunkgerät (100) einem Benutzer zugeordnet wird.

13. Betriebsverfahren nach Anspruch 9 bis 12, wobei das Mittel zum Einschließen gesicherter Anmeldedaten zumindest teilweise auf einem Subscriber Identity Module (SIM) vorhanden ist, das in dem Mobilfunkgerät (100) installiert ist.

14. Betriebsverfahren nach Anspruch 12, wobei die voraktivierten Anmeldedaten das Mobilfunkgerät (100) einem Dienstanbieter zuordnen, der den Aktivierungsserver betreibt.

15. Vorrichtung, die ein nicht-transitorisches computerlesbares Medium umfasst, das einen Satz von Computeranweisungen umfasst, die, wenn sie von einer Gruppe von einem oder mehreren Prozessoren in einem Mobilfunkgerät (100) ausgeführt oder interpretiert werden, die Gruppe von Prozessoren veranlassen, das Verfahren gemäß der Ansprüche 9 bis 14 auszuführen.

## Revendications

1. Dispositif mobile d'utilisateur final (100) comprenant :
un modem de réseau cellulaire ; et
des moyens pour inclure des identifiants sécurisés ;
un ou plusieurs processeurs de service de dispositif (115) configurés pour lancer une séquence d'activation, la séquence d'activation étant déclenchée automatiquement par un ou plusieurs des processeurs de service (115) quand
(i) le dispositif mobile (100) est configuré pour utiliser des identifiants de pré-activation provenant des moyens pour inclure des identifiants sécurisés pour accéder à un premier réseau d'accès cellulaire par le biais du modem de réseau cellulaire, et
(ii) un utilisateur tente d'utiliser le dispositif mobile (100) d'une manière qui nécessiterait un accès à Internet par le biais du premier réseau d'accès cellulaire ; et
dans lequel l'un ou plusieurs des processeurs de service (115) guident la séquence d'activation de manière que
le dispositif mobile (100) se connecte à un serveur d'activation par le biais du modem de réseau cellulaire et du premier réseau d'accès cellulaire, en utilisant les identifiants de pré-activation provenant des moyens pour inclure des identifiants sécurisés,
le dispositif mobile (100) reçoit, à partir du serveur d'activation sur le premier réseau d'accès cellulaire, un ensemble de multiples options de service de réseau cellulaire, comprenant pour chacun de multiples supports de service de réseau cellulaire au moins une option pour activer un service sur ce support de service,
le dispositif mobile (100) accepte une entrée de l'utilisateur pour sélectionner une première des options de service de réseau cellulaire pour un premier des supports de service de réseau cellulaire et demander l'activation de la première option de service,
le dispositif mobile (100) transmet, sur la base de l'entrée, une demande d'activation pour la première option de service au serveur d'activation,
le dispositif mobile (100) reçoit à partir du serveur d'activation un ensemble d'identifiants permanents correspondant à la première option de service et au premier support de service et stocke automatiquement les identifiants permanents dans les moyens pour inclure des identifiants sécurisés de manière à remplacer les identifiants de pré-activation, et
le dispositif mobile (100) utilise l'ensemble d'identifiants permanents pour se connecter à un deuxième réseau d'accès cellulaire correspondant à l'ensemble d'identifiants permanents.

2. Dispositif mobile d'utilisateur final (100) selon la revendication 1, dans lequel les identifiants de pré-activation sont associés à une politique de service ambiante qui limite un accès aux données Internet par le biais du premier réseau d'accès cellulaire pour accéder au serveur d'activation, au moins certains aspects de la politique de service ambiante étant stockés sur le dispositif mobile (100) et appliqués par les processeurs de service (115).

3. Dispositif mobile d'utilisateur final (100) selon la revendication 2, dans lequel les identifiants permanents sont associés à une politique de service de données qui permet un accès de données Internet non autorisé par la politique de service ambiante, au moins certains aspects de la politique de service de données étant reçus par le dispositif mobile (100) en conséquence de la demande d'activation, stockés sur le dispositif mobile (100) et appliqués par les processeurs de service (115).

4. Dispositif mobile d'utilisateur final (100) selon la revendication 2, dans lequel les identifiants de pré-activation et les aspects de la politique de service ambiante sont préinstallés sur le dispositif mobile (100).

5. Dispositif mobile d'utilisateur final (100) selon les revendications 1 à 4, dans lequel les moyens pour inclure des identifiants sécurisés résident au moins en partie sur un module d'identité d'abonné (SIM) installé dans le dispositif mobile (100).

6. Dispositif mobile d'utilisateur final selon la revendication 5, dans lequel les identifiants de pré-activation associent le dispositif mobile (100) à un fournisseur de services exploitant le serveur d'application.

7. Dispositif mobile d'utilisateur final (100) selon les revendications 1 à 6, dans lequel le dispositif mobile (100) qui stocke les identifiants permanents dans les moyens pour inclure des identifiants sécurisés de manière à remplacer les identifiants de pré-activation comprend le dispositif qui stocke, dans un module d'identité d'abonné installé sur le dispositif, une indication du premier support de service et une signature ou un certificat sécurisé.

8. Dispositif mobile d'utilisateur final (100) selon les revendications 1 à 7, dans lequel le fait que les processeurs de service (115) sont configurés pour déclencher automatiquement la séquence d'activation sur la base en partie du moment où l'utilisateur tente d'utiliser le dispositif d'une manière qui nécessiterait un accès à Internet par le biais du premier réseau d'accès cellulaire comprend le fait que les processeurs de service (115) sont configurés pour détecter et répondre à une première tentative pour accéder à Internet par le biais du premier réseau d'accès cellulaire.

9. Procédé de fonctionnement dans un dispositif mobile d'utilisateur final (100) comprenant :
le lancement d'une séquence d'activation, la séquence d'activation étant déclenchée automatiquement quand le dispositif mobile (100) est configuré pour utiliser des identifiants de pré-activation provenant des moyens pour inclure des identifiants sécurisés pour accéder à un premier réseau d'accès cellulaire et un utilisateur tente d'utiliser le dispositif mobile (100) d'une manière qui nécessiterait un accès à Internet par le biais du premier réseau d'accès cellulaire ;
comme une partie de la séquence d'activation,
la connexion à un serveur d'activation par le biais du premier réseau d'accès cellulaire en utilisant les identifiants de pré-activation provenant de la mémoire d'identifiants sécurisés,
la réception, à partir du serveur d'activation sur le premier réseau d'accès cellulaire, d'un ensemble de multiples options de service de réseau cellulaire, comprenant pour chacun de multiples supports de service de réseau cellulaire au moins une option pour activer un service sur ce support de service,
l'acceptation d'une entrée d'utilisateur pour sélectionner une première des options de service de réseau cellulaire pour un premier des supports de service de réseau cellulaire et demander l'activation de la première option de service,
la transmission, sur la base de l'entrée d'utilisateur, d'une demande d'activation pour la première option de service au serveur d'activation,
la réception, à partir du serveur d'activation, d'un ensemble d'identifiants permanents correspondant à la première option de service et au premier support de service et le stockage automatique des identifiants permanents dans les moyens pour inclure des identifiants sécurisés de manière à remplacer les identifiants de pré-activation ; et
l'utilisation suivante de l'ensemble d'identifiants permanents pour se connecter à un deuxième réseau d'accès cellulaire correspondant à l'ensemble d'identifiants permanents.

10. Procédé de fonctionnement selon la revendication 9, dans lequel les identifiants de pré-activation sont associés à une politique de service ambiante qui limite un accès aux données Internet par le biais du premier réseau d'accès cellulaire pour accéder au serveur d'activation, le procédé comprenant en outre l'application d'au moins certains aspects de la politique de service ambiante qui sont stockés sur le dispositif mobile (100).

11. Procédé de fonctionnement selon la revendication 10, dans lequel les identifiants permanents sont associés à une politique de service de données qui permet un accès aux données Internet non autorisé par la politique de service ambiante, le procédé comprenant en outre la réception d'au moins certains aspects de la politique de service de données en conséquence de la demande d'activation, le stockage des aspects de la politique de service de données sur le dispositif et l'application des aspects de la politique de service de données.

12. Procédé de fonctionnement selon la revendication 10, dans lequel les identifiants de pré-activation et les aspects de la politique de service ambiante sont préinstallés sur le dispositif mobile (100) avant que le dispositif mobile (100) soit associé à un utilisateur.

13. Procédé de fonctionnement selon les revendications 9 à 12, dans lequel les moyens pour inclure des identifiants sécurisés résident au moins en partie sur un module d'identité d'abonné (SIM) installé dans le dispositif.

14. Procédé de fonctionnement selon la revendication 12, dans lequel les identifiants de pré-activation associent le dispositif mobile (100) à un fournisseur de services exploitant le serveur d'application.

15. Appareil comprenant un support lisible par ordinateur non transitoire comprenant un jeu d'instructions informatiques qui, quand elles sont exécutées ou interprétées par un groupe d'un ou plusieurs processeurs dans un dispositif mobile d'utilisateur final (100), amènent le groupe de processeurs à effectuer le procédé selon les revendications 9 à 14.
